(19) Europäisches Patentamt
European Patent Office
Office européen des brevets

(11) Publication number: 0 209 251
A2

(12) EUROPEAN PATENT APPLICATION

(21) Application number: 86304613.2

(51) Int. Cl.⁴: B 01 J 20/32

(22) Date of filing: 16.06.86

(30) Priority: 01.07.85 GB 8516570

(43) Date of publication of application: 21.01.87
Bulletin 87/4

(84) Designated Contracting States: AT BE CH DE FR GB IT LI LU NL SE

(71) Applicant: THE COMMON SERVICES AGENCY FOR THE SCOTTISH HEALTH SERVICE, Trinity Park House South Trinity Road, Edinburgh EH5 3SE Scotland (GB)

(72) Inventor: Pepper, Duncan S., 29 Mansion House Road, Edinburgh EH9 2JD Scotland (GB)

(74) Representative: Sheard, Andrew Gregory et al, Kilburn & Strode 30, John Street, London WC1N 2DD (GB)

(54) **Coupling reaction.**

(57) Hydroxy-substituted compounds such as hydroxy-substituted macroporous gels can be coupled to a nitrogen-containing base by means of a bis epoxide coupling agent. The resulting derivatised gels are useful in biological purification techniques.

EP 0 209 251 A2

# COUPLING REACTION

This invention relates to a method of gel coupling suitable for use in purification processes, particularly affinity chromatography.

Affinity chromatography itself is well known. It depends on the principle of specific and reversible affinity for a molecule to be purified, present in the moving phase in the case of chromatography, for an immobilised entity (the solid phase in chromatography).

Monoclonal antibodies have been coupled to stationary phases such as agarose gels, for example the Sepharose 2B product available from Pharmacia Fine Chemicals. The word "Sepharose" is a trade mark. Cyanogen bromide is often used to couple monoclonal antibodies to the gel, and US Patent No. 4361509 gives an example of the use of monoclonal antibodies coupled in this way to Sepharose 2B in a process for the purification of factor VIII.

The factor VIII complex is known to consist of several constituents, which are all proteins or glycoproteins. The glycoprotein factor VIII itself is the protein deficient or abnormal in haemophilia A, and the associated glycoprotein vWF is the protein deficient or abnormal in von Willebrand's disease.

But the use of monoclonal antibodies is not without its disadvantages. First, they tend to be costly and relatively difficult to produce, even though biotechnological skills have made their preparation

much simpler over the last few years. Secondly, and perhaps more importantly, it has to be remembered that monoclonal antibodies are the product of hybridoma cells, which are necessarily derived from tumour cells. This is significant when monoclonal antibodies are used in the purification of protein or glycoprotein products which are injected into humans; take for example the possibility of injection of factor VIII constituents in the treatment of haemophilia.

There is also more generally concern about the use of monoclonal antibodies for the preparation of injectable proteins. Monoclonal antibodies will detect and purify even fragments of the target protein, which will not be differentiated from the whole molecule. There is therefore a danger, possibly slight but nevertheless real, that injected fragments of the target therapeutic protein will be immunogenic themselves and will therefore possibly cause antibodies to be raised against the whole protein. With insulin, this is known to happen: diabetics tend to generate antibodies to insulin, but in their case the problem can be overcome relatively simply by injecting more insulin. This cannot safely be done with, for example, factor VIII and its constituents because of the potential risk of accidental overdose and hypercoagulability that would result.

It is known to immobilise simpler molecules than antibodies to gels for use in affinity chromatography. For example, Pierce sell an immobilised poly-L-lysine product, which is attached by a carbonyl diimidazole process to a beaded agarose gel.

A more common binding system is cyanogen bromide, which as discussed above has been used for binding monoclonal antibodies to supports. It can also be used for binding simpler ligands, for example, Pharmacia reportedly prepared their Sepharose AH product by coupling 1,6-diaminohexane to Sepharose 2B or 4B with cyanogen bromide.

For a variety of reasons it would be desirable to provide a versatile and flexible coupling agents for linking bases to gels in, for example, affinity chromatography applications: the most pressing need is in the preparation of injectable protein products, where the best available process to date uses monoclonal antibodies, which have the disadvantages previously discussed. The use of cyanogen bromide has the particular disadvantage that gels coupled with it are susceptible to alkaline degradation; this is a problem as alkali cleaning (eg with 0.2 M sodium hydroxide) is recommended for thoroughly cleaning various gels after use.

Nitrogen-containing base compounds have been found to be useful in the purification of factor VIII or its constituents. These compounds include derivatised amino hydrocarbons (such as alkanes), diamino hydrocarbons such as diamino alkylene compounds, for example 1,5-diamino pentane, and alkyl diamino alkylene compounds. Examples of such compounds include diamino hexane, n-ethyl diamino hexane, n-isopropyl diamino hexane, and N-hydroxypentyl diamino pentane.

But polymeric nitrogen-containing bases are

particularly preferred. They tend to be bigger and more flexible than monomeric bases. They have many nitrogen atoms available for bonding to the target molecules, which renders their use particularly efficient. Further, their polymeric nature gives some control over steric access, which in turn leads to flexibility in applications. There is also a measure of control over inter-group spacing, hydrophobic qualities and ionic spacing by choice of appropriate bases. Suitable polymeric bases include poly(basic amino acids) such as polylysine and polyornithine, polyalkyleneimines such as polypropyleneimine, poly-ethyleneimine or polydiallylamine, polyalkyloxazolines such as polyethyloxazoline (0 to 50% dealkylated) and especially the polymer of N,N,N',N'-tetramethyl-N-trimethylenehexamethylenediammoniumbromide, which is sold under the trade mark Polybrene. Further suitable polymers include poly(N,N-dimethyl-3,5-dimethylene-piperidinium chloride), the polymeric yellow food dye (Dynapol) T-128, polydiallyldimethylammonium chloride, which is available from Dojindo, and basic proteins such as protamine. It will be observed that many of the preferred polymeric nitrogen-containing bases are polymeric nitrogen-containing hydrocarbons and that the protein need not be an antibody.

Many of the above bases have quaternary ammonium groups and would therefore generally be expected to be unreactive. But is has come to be appreciated that one or more of the nitrogen atoms of the polymer may still be reactive as they are not all necessarily quaternised. Only one of the nitrogen atoms needs to remain unquaternised for the reaction to work, and in

practice it has always been found that at least one nitrogen atom is available for reaction, by either one of the terminal nitrogen atoms or one of the mid-chain nitrogen atoms not being quaternised. It has now unexpectedly been found that the use of particular coupling agents not only work where it was not expected that they would, but also give surprisingly useful products.

According to a first aspect of the present invention, there is provided a method of linking a nitrogen-containing base, particularly a polymeric nitrogen-containing base, with a hydroxy-substituted gel or other hydroxy-substituted compound, the method comprising reacting a bis epoxy compound with the gel or other hydroxy compound and with the nitrogen-containing base. It is to be understood that the order of reaction is immaterial. The bis epoxy compound may further react with the gel or base, but in order to optimise the yield of the appropriately linked product, it is preferred that all three be present at the same time.

Suitable bis epoxy compounds comprise two epoxide residues coupled by an appropriate non-interfering linkage. Examples include compounds of general formula I:

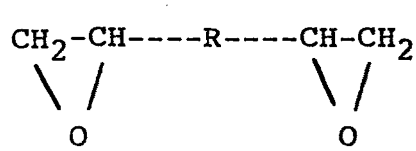

wherein R represents a non-interfering divalent radical such as a hydrocarbon radical or an oxy hydrocarbon

radical, for example alkylene or alkyleneoxy radicals. Particular examples of compounds of formula (I) are alkanediol diglycidyl ethers (eg: C1 to C6 alkanediol diglycidyl ethers) such as 1,4-butanediol diglycidyl ether.

It is with the hydroxy groups that the cross linking agents react. There are essentially two reactions: a hydroxy group activation reaction and the coupling reaction itself. For the activation reaction, the duration may be from 2 to 48 hours, preferably from 3 to 20 hours and typically is about 15 hours; the pH may range from 11 to 14, preferably from 12 to 13.5 and typically is about 13; the temperature may range from $0^o$ to $60^o$, preferably from $15^o$ to $30^oC$ and typically is about $20^oC$; and the volume/volume concentration of the coupling reagent (for example the bis epoxy compound such as 1,4-butanediol diglycidyl ether) may be from 20 to 40%, preferably 30 to 35% and typically is about 33%.

For the actual coupling reaction, the duration may be from 5 to 100 hours, preferably from 10 to 49 hours, and typically is about 48 hours; the pH may range from 9 to 14, preferably from 10 to 13, and typically is about 12; the temperature may range from $10^o$ to $60^o$, preferably from 20 to $50^oC$ and is typically about $40^oC$; and the concentration of the base may range from 0.1% to 20%, preferably from 1 to 10%, and typically is about 3% based on the amount of the hydroxy-containing gel or other compound (w/w).

The activation reaction forms a second aspect of the

invention, according to which there is provided a method of activating a hydroxy-containing compound, for example a hydroxy-containing gel, which comprises reacting the compond with a bis epoxy compound, generally under basic conditions.

The solvent for each reaction, or both of them, can be any suitable solvent such as water, dimethylsulphoxide or dioxane. Water is preferred. The reaction mixture is preferably subjected to agitation usually in the form of rotary mixing or shaking (both of which may be horizontal), but stirring (for example magnetic stirring) can be used. Some form of agitation will be especially useful if the coupling agent is immiscible with the solvent; for example, 1,4-butanediol diglycidyl ether is immiscible with water. The agitation rate may be in the order of 10 to 100 rpm but will in any case be sufficient to achieve enough mixing of any separate phases there may be.

It is possible to add a reducing agent such as sodium borohydride to the reaction mixture, for example at a concentration of 1mM. But in view of the already favourable reducing conditions of the reaction its presence is not essential. Indeed, the presence of such a reducing agent, which has been found to be essential when coupling microporous agarose gels to avoid the alkaline depolymerisation of the gel, has its disadvantages. Principally these are centred round the generation of hydrogen gas which increases the pressure in the reaction system and forces the strongly alkaline reaction medium out through joints, seals and taps. The use of such a reducing agent is therefore

preferably avoided.

After coupling to the hydroxy-containing compound, the nitrogen-containing base can be derivatised by reductive alkylation with an aldehyde or ketone and a reducing agent. For example, sodium borohydride, together with acetaldehyde, acetone or glutaraldehyde can further derivatise an aminohexyl substituted hydroxy-containing compound to the corresponding N-ethyl diamino hexane, N-isopropyl diamino hexane or N-hydroxypentyl diamino hexane compound.

The present invention finds particular application in the preparation of nitrogen-containing base-derivatised gels suitable for use in the purification of biological macromolecules such as factor VIII or its constituents. Particularly, macroporous gels having molecular weight exclusion limits of at least 2.5 times the molecular weight of the factor VIII complex can be used. The molecular weight of the factor VIII complex is in the order of $1 \times 10^7$ Daltons While the exclusion limit of the macroporous gel to be used in this purification seemingly has to be at least 2.5 times the molecular weight, it is preferable that the exclusion limit be at least 3,4,5 or even 10 to 20 times the molecular weight. A particularly suitable hydroxy-containing gel is that sold by Pharmacia under the trade mark Sephacryl S-1000, which is prepared by covalently cross-linking allyl dextran with N,N'-methylene bisacrylamide to give a rigid gel with a carefully controlled range of exclusion limits. The exclusion limit of the Sephacryl S-1000 product is about 350 nm. Other suitable gels having appropriate exclusion limits

are Sephacryl S-500 and Fractogel TSK HW-75 produced by the Toyo Soda Company. The word "Fractogel" is a trade mark for products which are matrices of hydrophilic vinyl polymers, as opposed to the customary dextran-based gels. The pore walls of the Fractogel TSK products are reportedly from interwoven polymeric agglomerates, which results in desirable mechanical stability problems. This contrasts with the structure of agarose gels, which is more like a ball of tangled wool on a microscopic scale.

Where lower molecular weight molecules are to be processed, less porous gels can offer greater capacity and it is found that Sephacryl gels of porosity S-200, S-300, S-400 and S-500 covering the molecular weight range from 5 x $10^3$ to 8 x $10^8$ can all be derivatised by the above method. Similarly, all the Fractogel series of porosity TSK40, TSK50, TSK55, TSK65, TSK75 covering the moelcular weight range from 3 x $10^3$ to 5 x $10^7$ can be derivatised by the above method. Other gels having free hydroxyl groups have also been successfully derivatised including Sepharose 4B and 6B (manufactured by Pharmacia) and Cellufine GC-200, GC-700 and GC-2,000 (manufactured by Chisso Corporation). (The words "Sepharose" and "Cellufine" are trade marks.) In general the particular choice of bead will depend on the molecular weight of the target molecule, the pressure/flow rate desired in the system and the cost of reagents.

The method of the present invention comes particularly into its own when coupling bases that are in classical terms generally thought of as being unreactive to gels.

An example of this type of base is Polybrene, as discussed above. Other examples are polyethyloxazoline (100% alkylated), which would be expected to be unreactive and Vantocil (trade mark) which is a polymeric biguanide used as a bacteriostat in the food and brewing industry. Further, it has been discovered that once bases have been coupled by means of the process of the present invention, the resulting gels are less "leaky" than gels coupled by conventional techniques.

It is to be noted, however, that the invention is confined neither to the use of macroporous gels nor to stages in the preparation of factor VIII or its constituents. Nitrogen-containing bases can be coupled to other hydroxy-containing gels, such as agarose, dextran, cellulose, and their composites with synthetic organic polymers, and the method can be used in the purification, assay or depletion of other compounds, for example sulphated polysaccharides such as heparin, heparan sulphate, dermatan sulphate, keratan sulphate, chondroitin sulphates, dextran sulphates, carrageenans, xylan sulphates and totally synthetic sulphated polymers such as polystyrene sulphonates, polyvinyl sulphonates and polyanethole-sulphonate.

The following examples illustrate the invention.

Example 1

This is an example of the production of an activated and coupled gel. One volume (100 ml) of moist gel cake (Sephacryl S-1000) is mixed with 100 ml 0.6M sodium

hydroxide and 100 ml of 1,4-butanediol diglycidyl ether. The reaction mixture is shaken in a horizontal shaker at 40$^{o}$C for four hours. The resulting epoxy-activated gel is copiously washed with water on a filter until the pH of the effluent is less than 8. To 50g of the moist activated gel is added 500 mg of poly-L-ornithine (Sigma Catalogue No. P4638; Batch No. 129C-5025; molecular weight 160,000 Daltons) in 50 ml of water. The pH is adjusted to 12.01 by drop wise addition of 4M sodium hydroxide. The reaction mixture is shaken in a horizontal shaker at 40$^{o}$C for 48 hours and then washed copiously with water on a filter to remove the unbound reagents.

Example 2

The procedure of Example 1 was followed, except that in place of the 500 mg poly-L-ornithine, 685 mg of poly-D-lysine (molecular weight 199,000 Daltons) was used and the pH was adjusted to 12.71.

Example 3

The procedure of Example 1 was followed, except that in place of the 500 mg poly-L-ornithine, 5g of polypropylene imine (molecular weight 300 to 3000 Daltons) was used and the pH was adjusted to 12.48.

Example 4

The procedure of Example 1 was followed, except that in place of the 500 mg poly-L-ornithine, 5g of polyethyloxazoline (50% dealkylated) (ICI; molecular

weight 100,000 Daltons) was used and the pH was adjusted to 12.08.

Example 5

The procedure of Example 1 was followed, except that in place of the 500 mg poly-L-ornithine, 5g of poly (N,N-dimethyl-3,5-dimethylene piperidinium chloride) (Aldrich) was used and the pH was adjusted to 12.22.

Example 6

The procedure of Example 1 was followed, except that in place of the 500 mg poly-L-ornithine, 5g of 1,8-diamino-p-menthane was used and the pH was adjusted to 12.92.

Example 7

The procedure of Example 1 was followed, except that in place of the 500 mg poly-L-ornithine, 5g of spermidine was used and the pH was adjusted to 12.81.

Example 8

The procedure of Example 1 was followed, except that only 5g of Sephacryl S-1000 were used and, in place of the 500 mg poly-L-ornithine, 1g of polyethylene imine was used and the pH was adjusted to 12.70.

Example 9

The procedure of Example 1 was followed, except that

only 5g of Sephacryl S-1000 were used and, in place of the 500 mg poly-L-ornithine, 100 mg poly-L-lysine (molecular weight 37,300 Daltons) was used and the pH was adjusted to 12.17.

Example 10

The procedure of Example 1 was followed, except that only 5g of Sephacryl S-1000 were used and, in place of the 500 mg poly-L-ornithine, 100 mg polydiallylamine (molecular weight 26,300 Daltons) was used and the pH was adjusted to 12.20.

Example 11

The procedure of Example 1 was followed, except that only 5g of Sephacryl S-1000 were used and, in place of the 500 mg poly-L-ornithine, 1g of poly(diallyldimethylammonium chloride) (Dojindo) was used and the pH was adjusted to 12.84.

Example 12

The procedure of Example 1 was followed, except that only 5g of Sephacryl S-1000 were used and, in place of the 500 mg poly-L-ornithine, 150 mg of protamine BP (Weddel) was used and the pH was adjusted to 12.00.

Example 13

The procedure of Example 1 was followed, except that only 5g of Sephacryl S-1000 were used and, in place of the 500 mg poly-L-ornithine, 500 mg of Polybrene

(Aldrich) was used and the pH was adjusted to 12.72.

Example 14

The procedure of Example 1 was followed, except that only 5g of Sephacryl S-1000 were used and, in place of the 500 mg poly-L-ornithine, 500 mg of Dynapol T-128 (Aldrich) was used and the pH was adjusted to 12.85.

Example 15

The procedure of Example 1 was followed, except that only 5g of Sephacryl S-1000 were used and, in place of the 500 mg poly-L-ornithine, 500 mg of 1,5-diaminopentane was used and the pH was adjusted to 12.80.

Example 16

The procedure of Example 1 is followed, except that Fractogel TSK HW-75 is used in place of Sephacryl S-1000.

Example 17

The procedure of Example 15 is followed, except that Fractogel TSK HW-75 is used in place of Sephacryl S-1000.

Example 18

Polyornithine-derivatised gel as prepared in Example 1

was taken and foreign particles were removed by decantation. 2 ml of the gel was packed into a disposable polypropylene chromatograph column (Wright) having a 7 mm internal diameter and a height of 60 mm. The volume of the column was 2.5 ml. The gel in the column was washed with 10 column volumes of starting buffer (20mM citrate, 20mM tris, pH 7.8). 5 ml of cryoprecipitate containing, per ml, 8.7 units of FVIII:C, 32.1 mg of total protein (and having fibrinogen as the major protein at 20.4 mg per ml) were pumped through the column at a frontal linear flow velocity of 50 mm per minute. This was followed by ten volumes (50 ml) of starting buffer and then a gradient of increasing concentration of sodium chloride from 0 to 2M in starting buffer over 2 hours. 2 ml fractions were collected. The column was simply washed with starting buffer by way of regeneration, although it should be noted that alkaline washing with 0.2M sodium hydroxide could have been undertaken at this stage. Fibrinogen, fibronectin, vWFAg and FVIIIC:Ag were assayed by appropriate immunoassay techniques. The total protein was measured by the $OD_{280}$, the salt by conductivity and the FVIIIC activity by means of a Kabi Coatest F-VIII chromogenic kit.

Example 19

One volume of Fractogel TSK HW 55(F) was mixed with one volume of 0.6 M NaoH and one volume of 1,4-butanedioldiglycidyl ether and mixed on a horizontal roller mixer at 20°C for 16 hours after which all residual ether was removed by copious washing with water on a filter. The activated gel was mixed with an

equal volume of a solution of Polybrene (20 mg/ml) in 1.0 M sodium carbonate adjusted to a pH of 12.6 with solid sodium hydroxide and coupling was allowed to proceed at 20°C for 72 hours whilst mixing on a horizontal roller mixer. The coupled Polybrene gel was washed well in water (three times) 10% v/v acetic acid (once) and then in phosphate buffered saline to remove unreacted Polybrene and fine gel particles or fragments. The resulting gel was found to have a content of about 10 mg of Polybrene bound per ml of gel as determined by titration with dextran sulphate solutions.

Example 20

The procedure of Example 19 was used except that Sephacryl S-300 was used. The resulting Polybrene Sephacryl gel had a content of about 8 mg/ml of Polybrene as determined by dextran sulphate titration.

Example 21

The procedure of Example 19 was used except that Sepharose 6B was used. The resulting gel had a content of about 9 mg/ml of Polybrene as determined by dextran sulphate titration.

Example 22

The procedure of Example 19 was used except that Cellufine GC-2,000 was used. The resulting gel had a content of about 7 mg/ml of Polybrene.

## CLAIMS

1. A method of linking a nitrogen-containing base with a hydroxy-substituted gel or other hyroxy-substituted compound, the method comprising reacting a bis epoxy compound with the gel or other hydroxy compound and with the nitrogen-containing base.

2. A method as claimed inClaim 1, wherein the hyroxy-substituted compound, the bis epoxy compound and the nitrogen-containing base are reacted contemporaneously.

3. A method as claimed in Claim 1 or 2, wherien the bis epoxy compound is of general formula I:

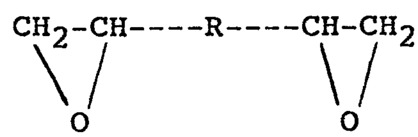

(I)

wherein R represents a $C_1$ to $C_6$ hydrocarbon radical or an oxy hydrocarbon radical.

4. A method as claimed in any one of Claims 1 to 3, wherein, after coupling to the hydroxy-containing compound, the nitrogen-containing base is derivatised.

5. A method as claimed in any ne of Claims 1 to 4, wherein the hydroxy-substituted compound is a macroporous hydroxy-substituted gel.

6. A method as claimed in Claim 5, wherien the gel is a cross-linked allyl dextran gel, a hydrophilic vinyl polymer gel or an agarose gel.

7. A method as claimed in any one of Claims 1 to 6, wherein the nitrogen-containing base is polymeric.

8. A method as claimed in Claim 7, wherein the nitrogen-containing base is a polymer of N,N,N',N' -tetramethyl-N-trimethylenehexamethylene diammonium bromide.

9. A method as claimed in any ne of Claims 1 to 8, wherein the reaction is carried out in an aqueous solvent.

10. A method fo activating a hydroxy-containing compound such as a hydroxy-containing gel, which comprises reacting the compound with a bis epoxy compound.